# EUROPÄISCHE PATENTSCHRIFT

(11) **EP 3 303 918 B1**
(45) Veröffentlichungstag und Bekanntmachung des Hinweises auf die Patenterteilung: **03.04.2019**
(21) Anmeldenummer: 16738657.2
(22) Anmeldetag: 10.05.2016
(51) Int. Cl.: F21V 31/04, B64F 1/20, F21W 111/06, F21Y 115/10

(54) **SIGNALLEUCHTE**
SIGNAL LIGHT
LAMPE DE SIGNALISATION

(30) Priorität: 08.06.2015 DE 102015108956
(43) Veröffentlichungstag der Anmeldung: 11.04.2018
(73) Patentinhaber: BATT GmbH, 33602 Bielefeld (DE)
(72) Erfinder: BEGEMANN, Arnd, 33615 Bielefeld (DE)
(74) Vertreter: Ostermann, Thomas
(86) Internationale Anmeldenummer: PCT/DE2016/100211
(87) Internationale Veröffentlichungsnummer: WO 2016/198040

(56) Entgegenhaltungen:
- EP-A1- 1 197 603
- WO-A1-2004/102064
- DE-A1- 19 837 224
- JP-A- H0 949 213
- JP-A- H07 317 027
- JP-A- H08 189 016

## Beschreibung

Die Erfindung betrifft eine Signalleuchte nach dem Oberbegriff des Patentanspruchs 1.

Die Signalleuchte kann sowohl für den annähernd bodenbündigen Einbau (Unterflurfeuer) als auch als auch für die Montage auf einem Zapfen oder für die Montage an einer senkrechten Fläche (Überflurfeuer) ausgeführt sein.

Aus der EP 0 898 681 B1 ist ein Unterflurfeuer bekannt, das eine halbleiterbasierte Lichtquelle, einen Reflektor und eine Abschlussscheibe als Lichtabstrahlfläche des Unterflurfeuers vorsieht. Zwischen der Lichtquelle und der Abschlussscheibe ist ein optisches Element angeordnet, an dem das von der Lichtquelle abgestrahlte Licht gebeugt und dann nach Reflexion an Reflektorflächen des Reflektors auf die Abschlussscheibe trifft. Sowohl zwischen der Lichtquelle und dem optischen Element als auch zwischen dem optischen Element und der Abschlussscheibe ist Luft als Medium angeordnet. Da die Lichtquelle im Wesentlichen in horizontaler Richtung orientiert angeordnet ist und daher oberhalb derselben eine Schutzabdeckung zur Aufnahme von Kräften von Flugzeugen stabil ausgestaltet sein muss, weist das bekannte Unterflurfeuer einen relativ hohen Aufbau auf.

Aus der JP H08 189016 A und der JP H09 49213 A sind Signalleuchten bekannt, die keine konzentrische Bauweise einer Signalleuchte offenbaren.

Aus der WO 2004/102064 A1 ist eine Signalleuchte mit einem Lichtquellenträger enthaltend mehrere Öffnungen bekannt, in denen jeweils eine Lichtquelle angeordnet ist. Der Raum der Öffnung ist teilweise durch mit einem optisch transparenten Material gefüllt.

Aus der EP 1 197 603 A1 ist eine Signalleuchte mit einer Lichtquelle bekannt, die vollständig von einem transparenten Vergusskörper umgeben ist. Sie ist innerhalb eines Gehäuses angeordnet, das über einen Deckel verschlossen ist. Die bekannte Signalleuchte weist einen relativ aufwendigen Aufbau auf, da die Lichtquellen selbst gekapselt und mit einer Linse abgedeckt sind.

Aus der DE 198 37 224 A1 ist eine Signalleuchte mit halbleiterbasierten Lichtquellen bekannt, die gekapselt in einer Kassette untergebracht ist.

Aus der JP H07 317027 A ist eine Signalleuchte mit einem Gehäuse enthaltend eine halbleiterbasierende Lichtquelle und einen transparenten Vergusskörper bekannt, wobei sich der transparente Vergusskörper zwischen der Lichtquelle und einer Lichtabstrahlfläche erstreckt.

Aufgabe der vorliegenden Erfindung ist es, die Signalleuchte derart weiterzubilden, dass die lichttechnischen Anforderungen bei einer relativ kompakten bzw. flachen Bauweise des Unterflurfeuers gewährleistet sind.

Zur Lösung dieser Aufgabe weist die Erfindung die Merkmale des Patentanspruchs 1 auf.

Der besondere Vorteil der Erfindung besteht darin, dass die lichttechnischen Anforderungen relativ einfach mit wenigen optischen Bauteilen gewährleistet ist, wobei zusätzlich das Unterflurfeuer relativ flach aufgebaut ist. Grundgedanke der Erfindung ist es, einen transparenten Vergusskörper in einem Lichtführungsraum zwischen einer Lichtquelle und einer Lichtabstrahlfläche der Signalleuchte anzuordnen. Das von der halbleiterbasierten Lichtquelle abgestrahlte Licht tritt unmittelbar in den transparenten Vergusskörper ein und verlässt ihn erst wieder, nachdem das eingekoppelte Licht an gegebenenfalls Reflektorflächen des Reflektors optisch "verarbeitet" worden ist. Das von der Lichtquelle abgestrahlte Licht durchläuft nicht das Medium Luft bis zur Lichtabstrahlfläche. Der Vergusskörper haftet unmittelbar an der halbleiterbasierten Lichtquelle an. Der transparente Vergusskörper dient somit als Optikelement mit lichtführenden Eigenschaften, da zumindest eine Brechung an einer Oberfläche des Gusskörpers erfolgt. Darüber hinaus dient der Vergusskörper als Schutz gegen das Eindringen von Fremdkörpern und Feuchtigkeit in ein Gehäuse der Signalleuchte. Die elektrischen Baueinheiten, wie halbleiterbasierte Lichtquellen sowie eine elektrische Ansteuerung, sind somit geschützt (Explosionsschutz). Der Vergusskörper kann insbesondere zur nicht lösbaren Befestigung von Bauteilen der Signalleuchte dienen. Nach der Erfindung ist ein Gehäuse mit einer Aufnahmemulde vorgesehen, in der der Reflektor und der Vergusskörper angeordnet sind. Der Vergusskörper erstreckt sich zwischen dem Reflektor und einer aufrechten Wandung bzw. Innenseite der Aufnahmemulde. An einer Oberseite eines Bodens der Aufnahmemulde ist ein Lichtquellen-Träger zur Aufnahme der halbleiterbasierten Lichtquellen und an einer Unterseite des Bodens der Aufnahmemulde kann ein Versorgungsträger zur Aufnahme von Bauelementen für die Ansteuerung der Lichtquellen befestigt sein. Das Gehäuse ist als kompakter und massiver Körper ausgebildet, in dessen mittleren Bereich die optischen Bauelemente angeordnet sind. Nach der Erfindung ist der Vergusskörper durch eine aufrechte Innenseite des Gehäuses und der Reflektorfläche begrenzt, wobei ein Abstand der aufrechten Innenseite zu der Reflektorfläche kleiner ist als ein Abstand von gegenüberliegenden Reflektorflächen, die um eine Mittelachse des Gehäuses verlaufen. Der Vergusskörper ist somit in einer vergleichsweisen schmalen Rinne angeordnet, so dass die Angriffsfläche für über ein Unterflurfeuer rollende Körper begrenzt ist. Der Großteil der Oberseite des Unterflurfeuers wird durch eine Oberseite des Gehäuses und einer Oberseite des Reflektors gebildet. Eine Oberseite des Vergusskörpers ist kleiner als ein Viertel der Gesamtoberseite des Unterflurfeuers.

Nach einer Weiterbildung der Erfindung ist der Vergusskörper aus einem druckfesten und/oder wasserfesten Kunststoffmaterial gefertigt. Auf diese Weise ist gewährleistet, dass der Vergußkörper Gewichten eines Körpers standhält bzw. langzeitstabil in Verkehrsflächen eingesetzt werden kann.

Das Prinzip kann auch für Überflurfeuer ausgebildet werden, wobei die aufrechte Innenseite des Gehäuses dann identisch mit der Außenwand ist. Die Außenwand ist dann in Form eines Rohrs nach unten fortgesetzt. Die Montage erfolgt dann mittels auf einen Zapfen oder einer außen am Gehäuse angebrachte Montagevorrichtung. Vorteil ist die extrem kompakte Bauweise und Langzeitbeständigkeit.

Die eingesetzten Halbleiterlichtquellen können Licht sowohl im sichtbaren als auch im infraroten Bereich emittieren. Eine Kombination von Hableiterlichtquellen verschiedener Farben und auch infraroten Lichtquellen in einer Leuchte ist möglich.

Nach einer Weiterbildung der Erfindung weist die Aufnahmemulde des Gehäuses randseitig eine Aussparung auf, so dass eine flüssige Gussmasse von einer Unterseite des Gehäuses her in die Aufnahmemulde einfließen kann zur Bildung des Vergusskörpers. Vorteilhaft kann nach Montage der Lichtquelle mit dem Lichtquellenträger, des Versorgungsträgers sowie des Reflektors in einem letzten Herstellungsschritt durch Ausfüllen des Lichtführungsraums mit der Gussmasse die Herstellung abgeschlossen werden. Nach Aushärten der Gussmasse ist das Unterflurfeuer fertiggestellt und kann als kompakte Baueinheit montiert werden.

Ein Ausführungsbeispiel der Erfindung wird nachfolgend anhand der Zeichnungen näher erläutert.

Es zeigen:
- Fig. 1: eine perspektivische Draufsicht auf ein Unterflurfeuer,
- Fig. 2: eine perspektivische Untenansicht des Unterflurfeuers,
- Fig. 3: eine Seitenansicht des Unterflurfeuers,
- Fig. 4: einen Vertikalschnitt entlang der Schnittlinie IV-IV gemäß Figur 3 des Unterflurfeuers,
- Fig. 5: eine perspektivische Draufsicht auf ein Überflurfeuer und
- Fig. 6: einen Vertikalschnitt durch das Überflurfeuer.

Eine Signalleuchte kann als Unterflurfeuer zur Beleuchtung an Start-, Lande- oder Rollbahnen oder als Überflurfeuer und/oder zur Beleuchtung von Verkehrsflächen, Parkhäusern, Tunneln, Hubschrauberlandeplätzen etc. vorgesehen sein.

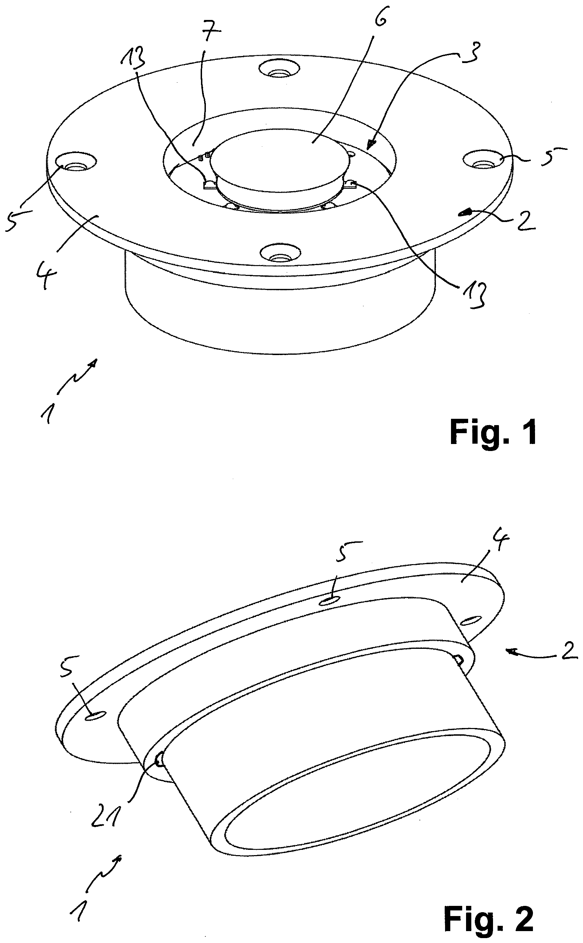

Ein Unterflurfeuer 1 nach den Figuren 1 bis 4 weist ein vorzugsweise tellerförmiges Gehäuse 2 auf mit einer Aufnahmemulde 3 und einem relativ breiten Tellerrand 4. An dem Tellerrand 4 sind Bohrungen 5 vorgesehen zur Schraubbefestigung des Unterflurfeuers 1 an einer Start-, Lande- bzw. Rollbahn.

Das Gehäuse 2 ist rotationssymmetrisch ausgebildet. Es kann alternativ auch länglich ausgebildet sein. Innerhalb der Aufnahmemulde 3 ist ein Reflektor 6 und ein in radialer Richtung an den Reflektor 6 anschließender transparenter Vergusskörper 7 angeordnet. Eine Oberseite 8 des Vergusskörpers schließt sich bündig an den Tellerrand 4 des Gehäuses 2 sowie an einer Oberseite 9 des Reflektors 6 an. Die durch den Tellerrand 4 und den Oberseiten 8 und 9 gebildete Oberseite des Unterflurfeuers 1 ist vorzugsweise eben ausgebildet.

Die Oberseite 8 des Vergusskörpers 7 bildet eine Lichtabstrahlfläche des Unterflurfeuers 1. Der Vergusskörper 7 füllt einen Lichtführungsraum aus, der sich in einem Bereich zwischen einer Reflektorfläche 10 des Reflektors 6 und einer aufrechten Innenseite 11 der Aufnahmemulde 3 erstreckt. Untenseitig wird der Lichtführungsraum 7 durch einen Lichtquellenträger 12 begrenzt, auf dessen Oberseite eine Mehrzahl von halbleiterbasierten Lichtquellen 13, vorzugsweise LED-Lichtquellen, angeordnet sind. Der Lichtquellenträger 12 ist als eine starre Leiterplatte ausgebildet, die auf einer Oberseite eines Bodens 14 der Aufnahmemulde 3 platziert und gegebenenfalls vorfixiert ist. Zur Vorfixierung weist das Gehäuse 2 Bohrungen 15 auf, so dass der Lichtquellenträger 12 durch Schraubverbindung an dem Gehäuse 2 vorfixierbar ist.

In einem Abstand zu einer Unterseite des Bodens 16 der Aufnahmemulde 3 ist ein Versorgungsträger 17 angeordnet, der eine elektrische Ansteuerung, insbesondere Bauelemente zur Energieversorgung und zur Ansteuerung der Lichtquellen 13 aufweist. Gegebenenfalls kann das Gehäuse 2 zur Vorfixierung des Versorgungsträgers 17 eine Bohrung aufweisen, so dass der Versorgungsträger 17 durch Schraubverbindung an dem Gehäuse 2, unter Anlage der Unterseite des Bodens 16 vorfixierbar ist.

Der Reflektor 6 ist über einen zentralen Schraubbolzen 19 an dem Gehäuse 2 fixiert. Der Reflektor 6 erstreckt sich zentral in der Aufnahmemulde 3 des Gehäuses 2 und weist die kreisförmig um eine Mittelachse M des Gehäuses 2 umlaufende Reflektorfläche 10 auf. Die Reflektorfläche 10 ist konkavförmig ausgebildet, so dass von den Lichtquellen 13 abgestrahlte Licht 20 unter einem relativ spitzen Winkel a nach Brechung an der Oberseite 8 des Vergusskörpers 7 umlaufend und in radialer Richtung abgestrahlt wird. Die Lichtquellen 13 sind gleichmäßig verteilt in Umfangsrichtung um den Reflektor 6 angeordnet, wobei eine optische Achse A derselben parallel zur Mittelachse M und senkrecht zur Oberseite 8 des Vergusskörpers 7 verläuft. Dadurch, dass die Lichtquellen 13 in einen zu der Reflektorfläche 10 nahen Bereich angeordnet ist, kann das Licht 20 unter einem relativ spitzen Winkel a von weniger als 20° abgestrahlt werden. Die vorgegebene Lichtverteilung kann hierdurch relativ einfach verwirklicht werden.

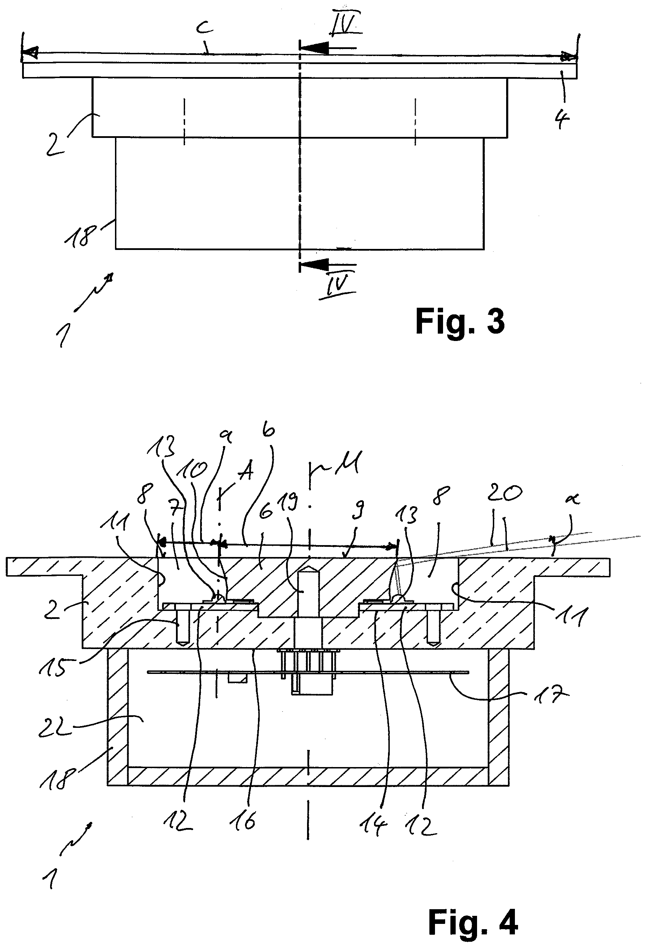

Wie aus Figur 4 zu ersehen ist, ist ein Abstand a zwischen der Reflektorfläche 10 und der aufrechten Innenseite 11 der Aufnahmemulde 3 kleiner als ein Durchmesser b des Reflektors 6 bzw. ein Abstand gegenüberliegender Reflektorflächen 10. Im vorliegenden Ausführungsbeispiel beträgt die Fläche der Oberseite 8 des Vergusskörpers 7 etwa 6 % einer Gesamtfläche der Oberseite des Unterflurfeuers 1, wobei die Gesamtfläche einen Durchmesser von c aufweist. Vorzugsweise weist die Oberseite 8 des Vergusskörpers 7 eine Fläche auf, die kleiner ist als ein Viertel der Gesamtoberfläche des Unterflurfeuers 1. Untenseitig ist das Gehäuse 2 mit einer Kappe 18 abgedeckt, die das Unterflurfeuer 1 vor Vibrationen schützt. Gegebenenfalls kann ein Zwischenraum zwischen der Klappe 18 und der Aufnahmemulde 3 voll ausgegossen sein mit dem Vergusskörper.

Der Vergusskörper 7 besteht aus einem druckfesten und wasserfesten Kunststoffmaterial. Es ist transparent und vollständig glasklar ausgebildet.

Nach einer nicht dargestellten alternativen Ausführungsform kann der Vergusskörper 7 an seiner Oberseite 8 auch mattiert oder profiliert zur Bildung von Optikelementen ausgebildet sein. Gegebenenfalls kann der Vergusskörper 7 an seiner Oberseite 8 mit Optikelementen versehen sein, um die gewünschte Winkelablenkung des Lichtes 20 zu gewährleisten.

Wie aus Figur 2 ersichtlich ist, weist die Aufnahmemulde 3 an ihrem Boden 14, 16 randseitig, bereichsweise in Umfangsrichtung verteilt angeordnete Aussparungen 21 auf, so dass eine flüssige Gussmasse von unten her in die Aufnahmemulde 3 einführbar ist zum Ausfüllen des Zwischenraums zwischen der Reflektorfläche 10 aufrechten Innenseite 11 der Aufnahmemulde 3 sowie zum Befestigen des Lichtquellenträgers 12 und gegebenenfalls des Versorgungsträgers 17.

Zur Montage des Unterflurfeuers 1 wird der Lichtquellenträger 12 an der Oberseite des Bodens 14 der Aufnahmemulde 3 und der Versorgungsträger 17 an der Unterseite des Bodens 16 der Aufnahmemulde 3 vorfixiert. Anschließend wird der Reflektor 6 mittels der Schraubbolzen 19 an dem Gehäuse 2 fixiert, wobei zusätzlich der Lichtquellenträger 12 an einer radial innenzugewandten Seite verklemmt wird. In einem abschließenden Schritt wird eine transparente Gussmasse über die Aussparung 21 von unten in die Aufnahmemulde 3 eingeführt. Das Gehäuse 2 liegt mit seiner Oberseite an einer Werkzeugfläche an, so dass die Gussmasse nur bis zur Erstreckungsebene der Oberseite 9 des Reflektors bzw. der Aufnahmemulde 3 fließen kann. Nach Aushärten der Gussmasse zu dem festen Vergusskörper 7 ist das Unterflurfeuer 1 fertiggestellt. Dies gilt für eine Ausführung des Unterflurfeuers 1 ohne Kappe 18.

Wenn die Signalleuchte 1 eine Kappe 18 aufweist, erfolgt das Einspritzen der Gussmasse von oben, wobei der Zwischenraum 22 vollständig durch die Gussmasse ausgefüllt wird. Nach Aushärten der Gussmasse kann die Kappe 18 entnommen werden, wenn sie beispielsweise aus Kunststoff besteht. Gegebenenfalls kann die Kappe 18 auch weiter anhaften, so dass sie mit dem Unterflurfeuer 1 zusammen verbaut wird.

Der Reflektor kann aus einem Metallmaterial hergestellt sein, wobei zur Bildung der Reflektorfläche 10 eine aufrechte Wandung desselben verspiegelt ausgebildet ist. Die Verspiegelung kann durch Bedampfen erfolgen. Alternativ kann der Reflektor 6 auch aus einem Metallkern und einem bedampften Kunststoffring bestehen. Wesentlich ist, dass der Reflektor 6 Schwerlasten aufnehmen kann.

Das Gehäuse 2 ist aus einem Metall, vorzugsweise aus einem Aluminiummaterial hergestellt.

Der Vergusskörper 7 ist aus einem transparenten Kunststoffmaterial hergestellt.

Auf den Vergusskörper 7 kann optional zum Schutz gegen Kratzer noch eine Glasplatte aufgeklebt oder in den Vergusskörper 7 eingelassen sein.

Nach einer nicht dargestellten alternativen Ausführungsform kann die Aufnahmemulde 3 des Gehäuses 2 auch eckig, statt kreisrund ausgebildet sein. Das gleiche gilt dann für den Reflektor.

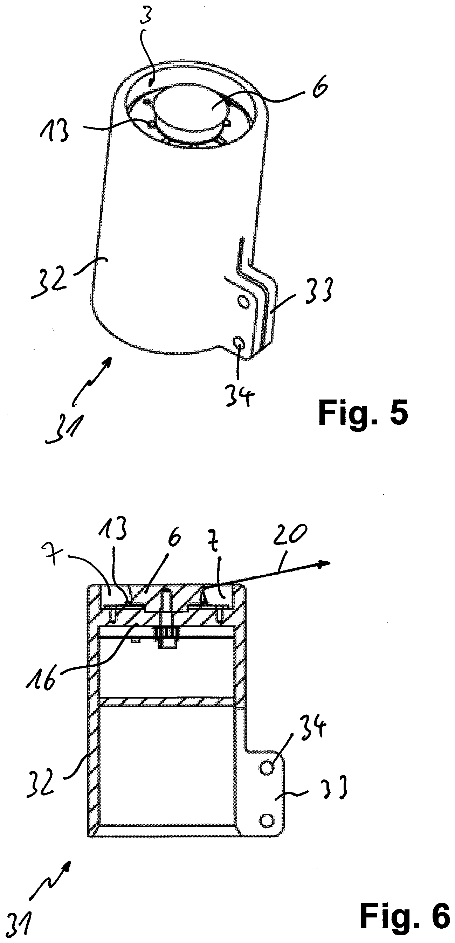

Nach einer Ausführungsform der Erfindung gemäß den Figuren 5 und 6 ist ein Überflurfeuer 31 vorgesehen, das ein rohrförmiges Gehäuse 32 aufweist. In dem Gehäuse 32 sind der Reflektor 6 und die Lichtquellen 13 angeordnet. Da der innere Aufbau des Überflurfeuers 31 dem des Unterflurfeuers 1 entspricht, weisen die Funktionsbauteile derselben die gleichen Bezugsziffern auf. Das Überflurfeuer 31 weist Flansche 33 mit Bohrungen 34 auf zur Befestigung desselben an einem aufrechten Träger.

Die Signalleuchte 1, 31 kann alternativ auch so ausgebildet sein, dass nicht radial in allen Richtungen um 360°, sondern gerichtet in eine einzige oder in gegenüberliegende oder in mehrere Richtungen Licht 20 abgestrahlt wird. Beispielsweise kann rotes Licht in die eine Richtung und grünes Licht in die gegenüberliegende Richtung abgestrahlt werden.

Beispielsweise kann das Gehäuse der Signalleuchte langgestreckt und/oder als eine Rinne ausgebildet sein, beispielsweise 30 cm lang.

Nach einer weiteren Ausführungsform der Erfindung ist die elektrische Ansteuerung (Elektronik) integraler Bestandteil des Vergusskörpers 7 bzw. ist ebenfalls vergossen, um maximalen Schutz gegen Beschädigung und Zerstörung durch Fremdkörper, Flüssigkeiten und (explosive) Gase zu gewährleisten (Explosionsschutz).

Das erfindungsgemäße Signalfeuer 1, 31 zeichnet sich durch integrierte Bauweise aus und ist damit wartungsfrei.
Es kann Betrieb an Schutzkleinspannung, Niederspannung oder an einem Stromversorgungsystem für Flughäfen (Serienkreis) erfolgen.

Optional kann das Signalfeuer 1, 31 an eine kontaktlos und induktiv übertragene Leistungsversorgung angeschlossen sein.

Optional kann eine integrierte Vorrichtung zur Dekodierung von auf die Versorgungsleitung aufmodulierte Daten vorgesehen sein, um das Signalfeuer 1, 31 zu steuern und zu überwachen.

## Patentansprüche

1. Signalleuchte (1, 31) mit einem Gehäuse (2) enthaltend halbleiterbasierte Lichtquellen (13) und eine Lichtabstrahlfläche (8) der Signalleuchte, wobei ein zwischen der halbleiterbasierten Lichtquelle (13) und der Lichtabstrahlfläche (8) vorhandener Lichtführungsraum von einem transparenten Vergusskörper (7) ausgefüllt ist, und wobei ein Reflektor (6) mit einer Reflektorfläche (10) vorgesehen ist, an der von den halbleiterbasierten Lichtquellen (13) abgestrahltes Licht (20) in Richtung der Lichtabstrahlfläche (8) der Signalleuchte (1) reflektierbar ist, **dadurch gekennzeichnet,**
- **dass** das Gehäuse (2) einen Tellerrand (4) und eine Aufnahmemulde (3) aufweist, innerhalb derer der Reflektor (6) und in radialer Richtung an dem Reflektor (6) anschließende transparente Vergusskörper (7) angeordnet sind, wobei eine Oberseite (18) des transparenten Vergusskörpers (7) sich bündig an den Tellerrand (4) des Gehäuses (2) sowie an einer Oberseite (9) des Reflektors (6) anschließt zur Bildung einer vorzugsweise eben ausgebildeten Oberseite der Signalleuchte,
- **dass** sich der transparente Vergusskörper (7) von einer Oberseite eines die Lichtquelle (13) aufnehmende Lichtquellenträgers (12) unter Anhaftung an der Reflektorfläche (10) bis zu der Lichtabstrahlfläche (8) der Signalleuchte (1, 31) erstreckt,
- **dass** die Lichtabstrahlfläche (8) durch eine Oberfläche des transparenten Vergusskörpers (7) gebildet ist,
- **dass** der transparente Vergusskörper (7) durch eine aufrechte Innenseite (11) der Aufnahmemulde (3) und der Reflektorfläche (10) des Reflektors (6) seitlich begrenzt ist, deren Abstand (a) zueinander kleiner ist als ein Abstand (b) von um eine Mittelachse (M) des Gehäuses (2) umlaufenden, gegenüberliegenden Bereichen der Reflektorflächen (10).

2. Signalleuchte nach Anspruch 1, **dadurch gekennzeichnet, dass** der Vergusskörper (7) aus einem druckfesten und/oder wasserfesten Kunststoffmaterial besteht.

3. Signalleuchte nach Anspruch 1 oder 2, **dadurch gekennzeichnet, dass** der Vergusskörper (7) vollständig glasklar oder lediglich an seiner Oberfläche (8) mattiert ausgebildet ist einerseits und/oder an seiner Oberfläche (8) mit Optikelementen versehen ist andererseits.

4. Signalleuchte nach einem der Ansprüche 1 bis 3, **dadurch gekennzeichnet, dass** die Oberfläche (8) des Vergusskörpers (7) eben oder minimal erhöht ausgebildet ist.

5. Signalleuchte nach einem der Ansprüche 1 bis 4, **dadurch gekennzeichnet, dass** auf einer der Lichtabstrahlfläche zugewandten Seite angeordneten Oberseite (14) eines Bodens der Aufnahmemulde (3) der Lichtquellenträger (12) einerseits und an einer der Lichtabstrahl-fläche abgewandten Seite angeordneten Unterseite des Bodens der Aufnahmemulde (3) ein Versorgungsträger (17) mit einer elektrischen Ansteuerung vorgesehen sind.

6. Signalleuchte nach einem der Ansprüche 1 bis 5, **dadurch gekennzeichnet, dass** der Vergusskörper (7) bündig zu einer Oberseite des Gehäuses (2, 32) und einer Oberseite (9) des Reflektors (6) verläuft.

7. Signalleuchte nach einem der Ansprüche 1 bis 6, **dadurch gekennzeichnet, dass** die Aufnahmemulde (3) des Gehäuses (2, 32) randseitig an ihrem Boden mindestens eine Aussparung (21) aufweist, derart, dass eine flüssige Gussmasse von einer Unterseite des Gehäuses (2, 32) her dem Lichtführungsraum zuführbar ist zur Bildung des Vergusskörpers (7).

8. Signalleuchte nach einem der Ansprüche 1 bis 7, **dadurch gekennzeichnet, dass** das Gehäuse (2, 32) Bohrungen (15, 18) aufweist zur Vorfixierung des Lichtquellenträgers (12) und/oder zur Vorfixierung des Versorgungsträgers (17) an demselben.

9. Signalleuchte nach einem der Ansprüche 1 bis 8, **dadurch gekennzeichnet, dass** der Reflektor (6) über einen in der Mittelachse (M) verlaufenden Bolzen (19) an dem Gehäuse (2, 32) fixiert ist.

10. Signalleuchte nach einem der Ansprüche 1 bis 9, **dadurch gekennzeichnet, dass** eine optische Achse (A) der Lichtquelle (13) parallel zur Mittelachse (M) des Gehäuses (2, 32) und senkrecht zu einer Oberseite der Signalleuchte (1) verläuft.

11. Signalleuchte nach einem der Ansprüche 1 bis 10, **dadurch gekennzeichnet, dass** eine Fläche der Oberseite bei einer Ausführung als Unterflurfeuer (8) des Vergusskörpers (7) kleiner ist als ein Viertel der Gesamtoberfläche der Signalleuchte (1, 31).

## Claims

1. A signal light (1, 31) having a housing (2) containing semiconductor-based light sources (13) and a light-radiating surface (8) of the signal light, wherein a light-guiding chamber provided between the semiconductor-based light source (13) and the light-radiating surface (8) is filled with a transparent potting body (7), and wherein
- a reflector (6) having a reflector surface (10) is provided, at which light (20) emitted by the semiconductor-based light sources (13) is reflectable in the direction of the light-radiating surface (8) of the signal light (1), **characterized in that**
- the housing (2) has a plate edge (4) and a receiving trough (3), within which the reflector (6) and transparent potting bodies (7) joining the reflector (6) in the radial direction are arranged, wherein an upper side (18) of the transparent potting body (7) flushly joins the plate edge (4) of the housing (2) as well as an upper side (9) of the reflector (6) in order to form an upper side of the signal light, which preferably has a planar configuration,
- **in that** the transparent potting body (7) extends from an upper side of a light source carrier (12) which receives the light source (13), adhering to the reflector surface (10), up to the light-radiating surface (8) of the signal light (1, 31),
- **in that** the light-radiating surface (8) is formed by a surface of the transparent potting body (7),
- **in that** the transparent potting body (7) is laterally delimited by an upright inner side (11) of the receiving trough (3) and the reflector surface (10) of the reflector (6), the distance (a) of which from one another is smaller than a distance (b) of opposite regions of the reflector surfaces (10) circulating around a central axis (M) of the housing (2).

2. The signal light according to Claim 1, **characterized in that** the potting body (7) consists of a pressure-resistant and/or water-resistant plastic material.

3. The signal light according to Claim 1 or 2, **characterized in that** the potting body (7) is configured to be completely crystal clear or merely frosted on its surface (8), on the one hand, and/or is provided with optical elements on its surface (8), on the other hand.

4. The signal light according to any one of Claims 1 to 3, **characterized in that** the surface (8) of the potting body (7) is configured to be planar or minimally elevated.

5. The signal light according to any one of Claims 1 to 4, **characterized in that**, on the one hand, the light source carrier (12) on an upper side (14) facing the light-radiating surface of a bottom of the receiving trough (3) and, on the other hand, a supply carrier (17) having an electrical actuation on a lower side facing away from the light-radiating surface of a bottom of the receiving trough (3) are provided.

6. The signal light according to any one of Claims 1 to 5, **characterized in that** the potting body (7) runs flush with an upper side of the housing (2, 32) and an upper side (9) of the reflector (6).

7. The signal light according to any one of Claims 1 to 6, **characterized in that** the receiving trough (3) of the housing (2, 32) has at its edge on its bottom at least one recess (21) such that that a liquid casting compound is suppliable from a lower side of the housing (2, 32) to the light-guiding chamber in order to form the potting body (7).

8. The signal light according to any one of Claims 1 to 7, **characterized in that** the housing (2, 32) has bores (15, 18) in order to pre-fix the light source carrier (12) and/or in order to pre-fix the supply carrier (17) to the same.

9. The signal light according to any one of Claims 1 to 8, **characterized in that** the reflector (6) is fixed to the housing (2, 32) by means of bolts (19) running in the central axis (M).

10. The signal light according to any one of Claims 1 to 9, **characterized in that** an optical axis (A) of the light source (13) runs parallel to the central axis (M) of the housing (2, 32) and perpendicular to an upper side of the signal light (1).

11. The signal light according to any one of Claims 1 to 10, **characterized in that** a surface of the upper side, in one embodiment as a recessed light (8) of the potting body (7), is smaller than one quarter of the total surface of the signal light (1, 31).

## Revendications

1. Lampe de signalisation (1, 31), avec un boîtier (2) contenant des sources de lumière à base de semi-conducteurs (13) et une surface de rayonnement de lumière (8) de la lampe de signalisation, sachant qu'un espace de guidage de lumière, présent entre la source de lumière à base de semi-conducteurs (13) et la surface de rayonnement de lumière (8), est rempli par un corps coulé, transparent (7) et sachant qu'est prévu un réflecteur (6), doté d'une surface de réflecteur (10), sur laquelle la lumière (20), rayonnée par les source de lumière à base de semi-conducteurs (13), peut être réfléchie en direction de la surface de rayonnement de lumière (8) de la lampe de signalisation (1),
**caractérisée en ce que**
- le boîtier (2) présente un bord de plateau (4) et une cavité de réception (3), à l'intérieur de laquelle le réflecteur (6) et le corps coulé, transparent (7), faisant suite au réflecteur (6) dans la direction radiale, sont disposés, sachant qu'une face supérieure (18) du corps coulé, transparent (7) se raccorde à fleur au bord de plateau (4) du boîtier (2) ainsi qu'à la face supérieure (9) du réflecteur (6) pour former une surface de la lampe de signalisation, de préférence plane,
- le corps coulé, transparent (7) s'étend de la face supérieure d'un support de source de lumière (12), accueillant une source de lumière (13), en adhérant à la surface de réflecteur (10), jusqu'à la surface de rayonnement de lumière (8) de la lampe de signalisation (1, 31),
- la surface de rayonnement de lumière (8) est formée par une surface du corps coulé, transparent (7),
- le corps coulé, transparent (7) est limité latéralement par une face intérieure, verticale (11) de la cavité de réception (3) et de la surface de réflecteur (10), la distance (a) entre celles-ci étant plus petite qu'une distance (b) entre des secteurs de surfaces de réflecteur (10) opposés, entourant un axe central (M) du boîtier (2).

2. Lampe de signalisation selon la revendication 1, **caractérisée en ce que** le corps coulé (7) consiste en un matériau synthétique résistant à la pression et / ou imperméable à l'eau.

3. Lampe de signalisation selon revendication 1 ou 2, **caractérisée en ce que** le corps coulé (7) est complètement clair comme le verre ou seulement maté sur sa surface (8), d'une part, et / ou pourvu, sur sa surface (8) d'éléments optiques, d'autre part.

4. Lampe de signalisation selon l'une des revendications 1 à 3, **caractérisée en ce que** la surface (8) du corps coulé (7) est de conception plane ou minimalement surélevée.

5. Lampe de signalisation selon l'une des revendications 1 à 4, **caractérisée en ce que,** sur une surface (14) d'un fond de la cavité de réception (3) du supports de source de lumière (12), disposé sur le côté orienté vers la surface de rayonnement de lumière, d'une part, et sur la face inférieure du fond de la cavité de réception (3), orientée à l'opposé de la surface de rayonnement, d'autre part, est disposé un support d'alimentation (17) avec une commande électrique.

6. Lampe de signalisation selon l'une des revendications 1 à 5, **caractérisée en ce que** le corps coulé (7) s'étend à fleur par rapport à une face supérieure du boîtier (2, 32) et d'une face supérieure (9) du réflecteur (6).

7. Lampe de signalisation selon l'une des revendications 1 à 6, **caractérisée en ce que** la cavité de réception (3) du boîtier (2, 32) est pourvue sur son fond, côté marginal, d'un évidement (21) de manière à ce qu'une masse de coulée liquide puisse être amenée, par le côté inférieur du boîtier (2, 32), dans l'espace de guidage de lumière afin de former le corps coulé (7).

8. Lampe de signalisation selon l'une des revendications 1 à 7, **caractérisée en ce que** le boîtier (2, 32) présente des alésages (15, 18) destinés à la préfixation du support de source de lumière (12) et / ou à la préfixation du support d'alimentation (17) sur celui-ci.

9. Lampe de signalisation selon l'une des revendications 1 à 8, **caractérisée en ce que** le réflecteur (6) est fixé sur le boîtier (2, 32) par le biais d'un boulon (19) s'étendant dans l'axe central (M).

10. Lampe de signalisation selon l'une des revendications 1 à 9, **caractérisée en ce que** l'axe optique (A) de la source de lumière (13) s'étend parallèlement à l'axe central (M) du boîtier (2, 32) et perpendiculairement par rapport à une face supérieure de la lampe de signalisation (1).

11. Lampe de signalisation selon l'une des revendications 1 à 10, **caractérisée en ce que,** dans un mode d'exécution du corps coulé (7) en tant que feu sous plancher (8), une aire de la face supérieure est plus petite qu'un quart de la surface totale de la lampe de signalisation (1, 31).
